# EUROPÄISCHE PATENTSCHRIFT

(11) **EP 1 736 744 B1**
(45) Veröffentlichungstag und Bekanntmachung des Hinweises auf die Patenterteilung: **14.08.2019**
(21) Anmeldenummer: 06114611.4
(22) Anmeldetag: 29.05.2006
(51) Int. Cl.: G01F 23/36

(54) **Füllstandsensor**
Filling level sensor
Capteur de niveau de remplissage

(30) Priorität: 24.06.2005 DE 102005029785
(43) Veröffentlichungstag der Anmeldung: 27.12.2006
(73) Patentinhaber: CPT Group GmbH, 30165 Hannover (DE)
(72) Erfinder: Benner, Hans-Günter, 65830, Kriftel (DE); Eck, Karl, 60318, Frankfurt/Main (DE); Pauer, Bernd, 65817, Eppstein (DE); Penzar, Zlatko, 60529, Frankfurt/Main (DE); Schröter, Knut, 61440, Oberursel (DE); Wiesberg, Paul-Dieter, 60439, Frankfurt/Main (DE)

(56) Entgegenhaltungen:
- WO-A-96/41136
- DE-U1- 29 700 625
- US-A- 3 403 376
- US-A- 3 913 400
- US-A- 5 357 815
- US-B1- 6 749 080

## Beschreibung

Gegenstand der Erfindung ist ein Füllstandsensor für einen Kraftstofftank, bestehend aus einer keramischen Trägerplatte mit einem darauf angeordneten Widerstandsnetzwerk und einer Kontaktstruktur zur Ermittlung eines elektrischen Signals für den Füllstand und einem mit der Trägerplatte verbundenen Deckel, wobei Deckel und Trägerplatte ein Gehäuse bilden.

Das Gehäuse derartiger Sensoren dient zur Aufnahme diverser Bauteile des Sensors, um sie gegen aggressive Medien zu schützen. Bei einem Einsatz des Sensors in einem Kraftstofftank muss das Gehäuse in erster Linie kraftstoffbeständig und flüssigkeitsdicht sein. Dazu ist es bekannt, einen dünnwandigen Deckel aus Metall zu verwenden, der neben der flüssigkeitsdichten Ausbildung des Gehäuses gleichzeitig einen ausreichenden Schutz gegen die im Betrieb des Kraftstoffbehälters auftretenden Drücke im Bereich von 70-100 mbar formbeständig ist. Die Druckschrift DE 29700625 U1 offenbart einen Füllstandsgeber für den Tank eines Kraftfahrzeuges, welcher eine günstige Herstellbarkeit und eine hohe Genauigkeit ermöglichen soll. Der Füllstandsgeber umfasst dabei ein Widerstandsnetzwerk, das an einem feststehenden Träger angeordnet ist, wobei am Widerstandsnetzwerk entsprechend der Position eines dem Niveau einer Flüssigkeit folgenden Schwimmers ein Ausgangssignal abnehmbar ist.

Sofern der Füllstandsensor nicht im fertigen Kraftstoffbehälter, sondern bereits zuvor in einen den späteren Kraftstoffbehälter bildenden Kunststoffvorformling eingebracht wird, kann der Füllstandsensor während des Herstellprozesses des Kraftstoffbehälters wesentlich höheren Drücken im Bereich von 8 bar bis 12 bar ausgesetzt werden. Infolge dieser hohen Drücke kommt es zu Verformungen des Deckels und der Trägerplatte, die wiederum zum Bruch der Trägerplatte führen, wodurch die Dichtheit des Gehäuses nicht mehr gewährleistet ist.

Der Erfindung liegt daher die Aufgabe zugrunde, einem Füllstandsensor zu schaffen, der neben der Beständigkeit gegenüber den Einflüssen seines Einsatzortes auch gegenüber einer Vormontage mit erschwerten Umwelteinflüssen beständig ist. Erfindungsgemäß wird die Aufgabe dadurch gelöst, dass der Deckel in seinem Randbereich mittels eines separaten Elements metallisch verstärkt ist.

Mit der Verstärkung des Deckels in seinem Randbereich wird in besonders einfacher Weise eine mechanische Verstärkung des Gehäuses und somit eine größere Beständigkeit des Deckels gegen Verformungen erreicht, die wiederum dazu führt, dass die Trägerplatte fester gelagert wird, wodurch sie auch bei größeren auf das Gehäuse einwirkenden Drücken weniger verformt und somit nicht beschädigt wird und die Dichtheit des Gehäuses erhalten bleibt. Da die Verstärkung lediglich auf den Deckel bezogen ist, können restlichen Bestandteile des Füllstandsgebers unverändert weiter benutzt werden. Die Verstärkung des Deckels bewirkt jedoch nicht nur einen Schutz bei großen Drücken, sondern auch bei gegenüber Normaldruck sehr kleinen Drücken.

In einer vorteilhaften Ausgestaltung wird die metallische Verstärkung des Randbereiches durch einen auf der der Trägerplatte abgewandten Seite des Randes aufgebrachten Metallrahmen erreicht, welcher das separate Element ausbildet. Diese Ausführung hat den Vorteil, dass mit dem Metallrahmen nur ein zusätzliches Bauteil vorzusehen ist, um die gewünschte Verstärkung zu erzielen.

Eine Verstärkung der Deckel von Füllstandsensoren unterschiedlicher Abmessungen wird in einfacher Weise erreicht, wenn auf der der Trägerplatte abgewandten Seite des Randes entlang der Seitenflächen Metallstreifen angeordnet sind. Der Vorteil besteht darin, dass die Metallstreifen mit geringem Aufwand an unterschiedliche Abmessungen des Deckels anpassbar sind. Die Metallstreifen können sowohl einem rechteckigen als auch eine runden Querschnitt aufweisen.

In Abhängigkeit von den auf das Gehäuse einwirkenden Belastungen kann es ausreichend sein, wenn die Metallstreifen entlang zweier Seitenflächen, vorzugsweise in Längsausrichtung, auf dem Rand angeordnet sind.

In einer weiteren Ausgestaltung sind in den von den Seitenflächen und dem Rand des Deckels gebildeten Bereichen Kehlnähte zur Erhöhung der mechanischen Steifigkeit aufgebracht. Die Kehlnähte können dabei entlang aller Seitenflächen oder entlang ausgewählter Seitenflächen angeordnet sein.

Der Aufwand zum Anordnen der Kehlnähte gestaltet sich gering, wenn die Kehlnähte mittels Löten aufgebracht sind.

An mehreren Ausführungsbeispielen wird die Erfindung näher erläutert. Dabei zeigen:
- Figur 1:: einen unverstärkten Füllstandssensor in einem Kraftstoffbehälter,
- Figur 2:: den Deckel eines nichterfindungsgemäßen Füllstandsensors nach Figur 1 in einer Schnittdarstellung,
- Figur 2a:: eine weitere Ausführungsform gemäß Figur 2,
- Figur 3-6:: erfindungsgemäße Ausführungsformen des Deckels.

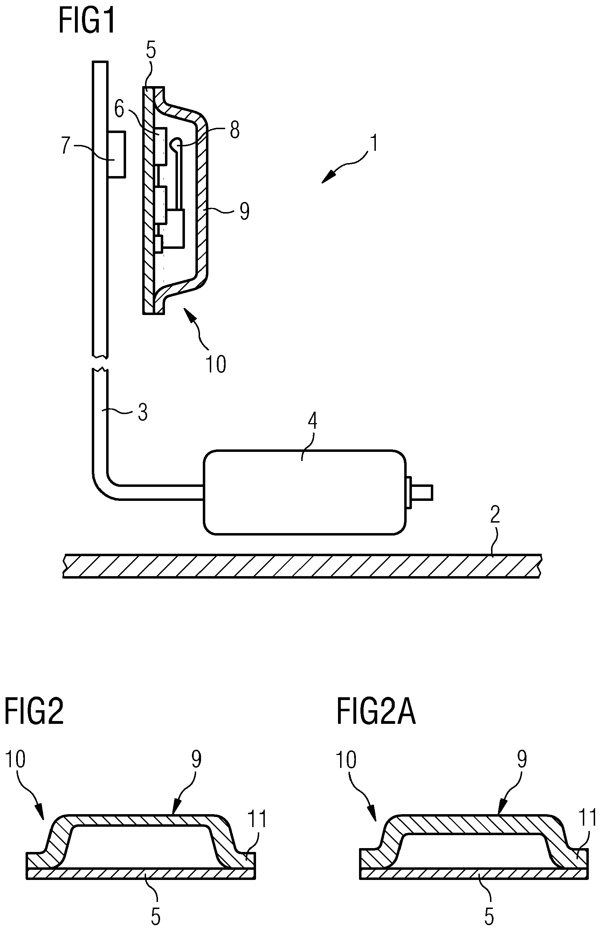

Der in Figur 1 dargestellte Füllstandsensor 1 ist in einem Kraftstoffbehälter 2 angeordnet. Der Füllstandsensor 1 besteht aus einem schwenkbar gelagerten Hebelarm 3, an dessen einen Ende ein Schwimmer 4 gelagert ist. Der Füllstandsensor 1 besitzt weiterhin eine keramische Trägerplatte 5, auf der ein elektrisches Widerstandsnetzwerk 6 aufgebracht ist. Eine von dem Hebelarm 3 mittels eines Magneten 7 auslenkbare Kontaktstruktur 8 erzeugt ein in Abhängigkeit von der Hebelarmstellung elektrisches Signal für den Füllstand. Die Trägerplatte 5 ist mit einem Deckel 9 unter Bildung eines Gehäuses 10 derart verbunden, dass das Widerstandsnetzwerk 6 und die Kontaktstruktur 8 gegenüber der Umgebung abgedichtet sind.

Figur 2 zeigt das aus Deckel 9 und Trägerplatte 5 bestehende Gehäuse 10 des Füllstandsensors 1. Der Rand 11 weist mit 0,8 mm eine größere Wanddicke auf als der obere, ebene Bereich des Deckels 9, der eine Wanddicke von 0,4 mm aufweist. Dadurch erhält der Deckel 9 eine ausreichende mechanische Verstärkung.

Figur 2a zeigt eine weitere Ausführungsform des Füllstandssensors 1, der sich gegenüber Figur 2 dadurch unterscheidet, dass der Deckel 9 eine gleich bleibende Wanddicke von 0,8 mm besitzt, während die Trägerplatte 5 eine Dicke von ca. 0,6 mm aufweist.

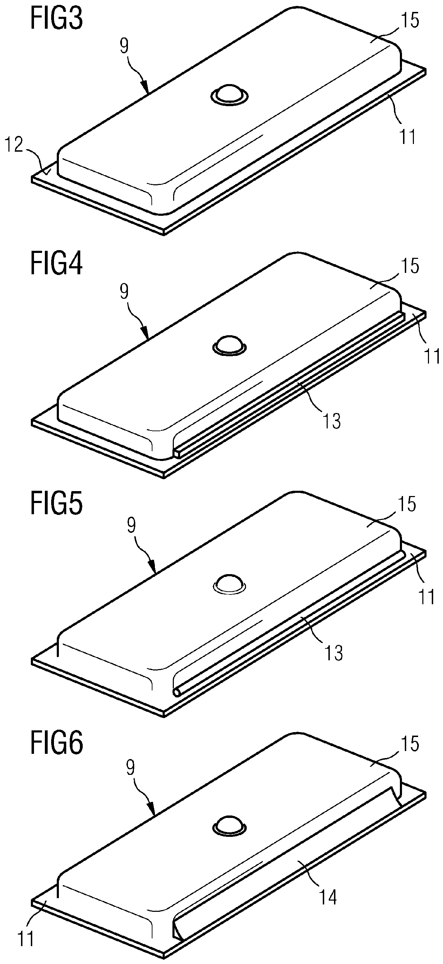

Der in Figur 3 dargestellte Deckel 9 weist zur Verstärkung einen Metallrahmen 12 auf, der auf der der Trägerplatte abgewandten Seite des Randes 11 mittels Löten angeordnet ist.

In den Figuren 4 und 5 sind zur Verstärkung des Deckels 9 Metallstreifen 13 auf der der Trägerplatte abgewandten Seite des Randes 11 angelötet. Die Metallstreifen besitzen einen rechteckigen und runden Querschnitt. In den gezeigten Darstellungen sind die Metallstreifen 13 parallel zur längsten Erstreckung des Deckels 9 angeordnet.

Der in Figur 6 gezeigte Deckel 9 wird die mechanische Verstärkung durch Kehlnähte 14 erreicht, die in den von den Seitenflächen 15 und dem Rand 11 des Deckels 9 gebildeten Bereichen angeordnet sind, wobei die Kehlnähte 14 ebenfalls lediglich in den Bereichen angeordnet sind, die parallel zur längsten Erstreckung des Deckels 9 verlaufen.

## Patentansprüche

1. Füllstandssensor (1) für einen Kraftstofftank (2), bestehend aus einer keramischen Trägerplatte (5) mit einem darauf angeordneten Widerstandsnetzwerk (6) und einer Kontaktstruktur (8) zur Ermittlung eines elektrischen Signals für den Füllstand und einem mit der Trägerplatte (5) verbundenen topfförmigen Deckel (9) mit einem nach außen weisenden, umlaufenden Rand (11) und daran angrenzenden Seitenflächen (15), wobei Deckel (9) und Trägerplatte (5) ein geschlossenes Gehäuse (10) bilden, indem der Rand (11) des Deckels (9) auf der Trägerplatte (5) aufliegt, wobei der Deckel (9) einen von dem Rand (11) und den angrenzenden Seitenflächen (15) gebildeten Randbereich besitzt, **dadurch gekennzeichnet, dass** der Deckel (9) in seinem Randbereich mittels eines separaten Elements (12, 13, 14) entlang zumindest einer Seitenfläche (15) metallisch verstärkt ist.

2. Füllstandssensor (1) nach Anspruch 1, **dadurch gekennzeichnet, dass** das separate Element als Metallrahmen (12) ausgebildet ist, der auf der der Trägerplatte (5) abgewandten Seite des Rands (11) aufgebracht ist.

3. Füllstandssensor (1) nach Anspruch 1, **dadurch gekennzeichnet, dass** das separate Element als Metallstreifen (13) ausgebildet ist, die auf der der Trägerplatte (5) abgewandten Seite des Rands (11) entlang der Seitenflächen (15) angeordnet sind.

4. Füllstandssensor (1) nach Anspruch 3, **dadurch gekennzeichnet, dass** die Metallstreifen (13) entlang zweier Seitenflächen (15), vorzugsweise in Längsausrichtung, auf dem Rand (11) angeordnet sind.

5. Füllstandssensor (1) nach Anspruch 1, **dadurch gekennzeichnet, dass** das separate Element als Kehlnähte (14) ausgebildet ist, die in den von den Seitenflächen (15) und dem Rand (11) des Deckels (9) gebildeten Bereichen aufgebracht sind.

6. Füllstandssensor (1) nach Anspruch 5, **dadurch gekennzeichnet, dass** die Kehlnähte (14) mittels Löten aufgebracht sind.

## Claims

1. Filling level sensor (1) for a fuel tank (2), comprising a ceramic mounting plate (5) with a resistance network (6) arranged thereon and a contact structure (8) for the detection of an electrical filling level signal, and a pot-shaped cover (9) which is connected to the mounting plate (5) and which has an outwardly pointing encircling edge (11) and side surfaces (15) adjoining said edge, the cover (9) and mounting plate (5) forming a closed housing (10) by virtue of the edge (11) of the cover (9) lying on the carrier plate (5), the cover (9) having an edge area formed by the edge (11) and by the adjoining side surfaces (15), **characterized in that** the cover (9) is, in its edge area, metallically strengthened along at least one side surface (15) by means of a separate element (12, 13, 14).

2. Filling level sensor (1) according to Claim 1, **characterized in that** the separate element is in the form of a metal frame (12) is fitted on the side of the edge (11) remote from the mounting plate (5).

3. Filling level sensor (1) according to Claim 1, **characterized in that** the separate element is in the form of metal strips (13) which are arranged along the lateral faces (15) on the side of the edge (11) remote from the mounting plate (5).

4. Filling level sensor (1) according to Claim 3, **characterized in that** the metal strips (13) are arranged on the edge (11) along two lateral faces (15), preferably oriented longitudinally.

5. Filling level sensor (1) according to Claim 1, **characterized in that** the separate element is in the form of fillet joints (14) which are applied in the areas formed by the lateral faces (15) and the edge (11) of the cover (9).

6. Filling level sensor (1) according to Claim 5, **characterized in that** the fillet joints (14) are applied by soldering.

## Revendications

1. Capteur de niveau de remplissage (1) destiné à un réservoir de carburant (2), constitué d'une plaque de support en céramique (5) pourvue d'un réseau de résistances (6) disposé sur celle-ci et d'une structure de contact (8) destinée à déterminer un signal électrique pour le niveau de remplissage, et d'un couvercle (9) en forme de pot relié à la plaque de support (5), qui présente un bord périphérique (11) dirigé vers l'extérieur et des surfaces latérales (15) adjacentes à celui-ci, dans lequel le couvercle (9) et la plaque de support (5) forment un boîtier fermé (10) en raison du fait que le bord (11) du couvercle (9) repose sur la plaque support (5), dans lequel le couvercle (9) possède une zone de bord formée par le bord (11) et les surfaces latérales adjacentes (15),
**caractérisé en ce que** le couvercle (9) est renforcé métalliquement le long d'au moins une surface latérale (15) dans sa zone de bord au moyen d'un élément séparé (12, 13, 14).

2. Capteur de niveau de remplissage (1) selon la revendication 1, **caractérisé en ce que** l'élément séparé est réalisé sous la forme d'un châssis métallique (12) qui est réalisé sur le côté du bord (11) qui est tourné à l'opposé de la plaque de support (5).

3. Capteur de niveau de remplissage (1) selon la revendication 1, **caractérisé en ce que** l'élément séparé est réalisé sous la forme de bandes métalliques (13) qui sont disposées le long des faces latérales (15) sur le côté du bord (11) qui est tourné à l'opposé de la plaque de support (5).

4. Capteur de niveau de remplissage (1) selon la revendication 3, **caractérisé en ce que** les bandes métalliques (13) sont disposées le long de deux surfaces latérales (15) sur le bord (11), de préférence de manière orientée longitudinalement.

5. Capteur de niveau de remplissage (1) selon la revendication 1, **caractérisé en ce que** l'élément séparé est réalisé sous la forme de soudures d'angle (14) qui sont réalisées dans les zones formées par les faces latérales (15) et le bord (11) du couvercle (9).

6. Capteur de niveau (1) selon la revendication 5, **caractérisé en ce que** les soudures d'angle (14) sont réalisées par brasage.
